# EUROPÄISCHE PATENTSCHRIFT

(11) **EP 2 192 334 B1**
(45) Veröffentlichungstag und Bekanntmachung des Hinweises auf die Patenterteilung: **30.05.2012**
(21) Anmeldenummer: 09014781.0
(22) Anmeldetag: 27.11.2009
(51) Int. Cl.: F16K 27/02, F16K 1/22

(54) **Drosselklappenarmatur**
Throttle valve fitting
Armature de clapet d'étranglement

(30) Priorität: 27.11.2008 CH 18572008
(43) Veröffentlichungstag der Anmeldung: 02.06.2010
(73) Patentinhaber: Müller GmbH, 79618 Rheinfelden (DE)
(72) Erfinder: Müller, Peter, 4153 Rheinach (CH); Löffler, Jörg, 79618 Rheinfelden (DE)
(74) Vertreter: Alder, Hans Rudi

(56) Entgegenhaltungen:
- DE-A1- 4 217 448
- US-A- 3 737 144
- US-A- 5 236 003
- US-A- 5 482 252

## Beschreibung

Die vorliegende Erfindung betrifft eine Drosselklappenarmatur zur Dosierung und/oder Regulierung der Fördermenge eines Füllguts gemäss Oberbegriff des Anspruchs 1.

Derartige Drosselklappenarmaturen, häufig auch Absperrklappen genannt, finden ihre Verwerdung in der Lebensmittel- und Pharmaindustrie, um flüssige oder rieselfähige Produkte reguliert abzufüllen.

In der Regel werden diese Armature einseitig oder beidseitig an einem Förderstutzen angeflanscht und sind deshalb entweder mit einem Vollflansch oder mit einem Doppelflansch ausgerüstet, wie dies in der EP-0'591'687 beschrieben ist oder werden zwischen den Rohrleitungflanschen festgeklemmt, wie in der US-3,666,233 vorgeschlagen. Derart befestigten Armaturen können im Gegensatz zu den festverschweissten Armaturen für die Reinigung oder Reparatur demontiert werden. Für die Demontage und Wiedermontage dieser Armaturen müssen alle Befestigungsschrauben der Flanschverbindungen gelöst bzw. wieder angebracht werden - eine zeitraubende und bei den in der Regel schlechten Zugangsmöglichkeiten umständliche Arbeit.

Es ist deshalb mit der DE-42'17'448 auch schon vorgeschlagen worden, eine wartungsfreundliche Drosselklappenarmatur zu konstruieren, bei welcher insbesondere das Gehäuse für die Drosselklappe aus zwei ringförmigen Teilen besteht. Diese beiden ringförmigen Gehäuseteile weisen einerseits einander gegenüberliegende Aussparungen auf, welche geeignet sind, im montierten Zustand, die Drosselklappe zwischen diesen Gehäuseteilen drehbar zu lagem. Andererseits weisen diese Gehäuseteile an den einander zugewandten Seiten Schutterringe auf, über welche ein Spannreif gespannt wird, um die beiden Gehäuseteile zusammenzuhalten. Dieser Spannreif ist mit einem geeigneten Verschluss versehen und kann in einfacher Weise demontiert werden.

Weitere Ausführungsformen wartungsfreundlicher Drosselklappenarmaturen, bei denen die Flansche der Gehäusehälften oder die Rohdeitungsflansche mittels eines Spannreifs zusammengeftalten werden, sind auch aus der US-3,737,144 oder der EP-0'683'340 oder der US-2007/0023727 bekannt

Bei all diesen Ausführungsformen von Drosselklappenarmaturen erfolgt die Verbindung der Gehäuseteile, Rohrleitungen oder Behälter mit Hilfe von Flanschen. Diese Flansche werden als Guss- oder Drehteile hergestellt, um den mechanischen Belastungen beim Regulieren des Förderguts standhalten zu können. Es versteht sich, dass Flansche deshalb auch eine erhöhte Wandstärke und damit ein hohes Materialgewicht aufweisen. Deren Herstellung ist aufwendig und kostspielig.

Es ist deshalb Aufgabe der vorliegenden Erfindung eine Drosselklappenarmatur zu schaffen, welche eine einfache, d.h. werkzeugfreie und montagefreundliche Handhabung (handling) für den Unterhalt derselben erlaubt und keine kostspieligen und schweren Bauteile (Gussteile, Drehteile) aufweist. Insbesondere soll eine leichtgewichtige Drosselklappenarmatur geschaffen werden, welche den mechanischen Belastungen einer industriellen Drosselklappenarmatur längefristig standhält ohne dafür schwere und kostspielige Bauteile zu benötigen.

Diese Aufgabe wird erfindungsgemäss durch eine Drosselklappenarmatur mit den Merkmalen des Anspruchs 1 gelöst und insbesondere durch eine Drosselklappenarmatur, welche einen Förderstutzen, einen Auslaufstutzen, eine dazwischen angeordnete Drosselklappe mit Lagerzapfen, welche in Rundlochöffnungen in einem elastischen Dichtungsring gelagert sind, sowie einen mit einer Spannverschlussvorrichtung verspannbaren Spannring zur Halterung, d.h. gegenseitigen Befestigung dieser Bauteile, umfasst. Dabei weisen der Förderstutzen und der Auslaufstutzens an ihren einander gegenüberliegenden Enden sich nach aussen aufweitende, angeformte Stufenränder auf, welche einen Dichtungssitz für den innen liegenden Dichtungsring bilden. Der Spannring umgreift im montierten Zustand diese Stufenränder, richtet sie zueinander aus, d.h. zentriert diese um eine gemeinsam Achse. Der Dichtungsring ist derart dimensioniert, dass im montierten Zustand die einander gegenüberliegenden Stufenränder voneinander beabstandet sind, d.h. sich nicht berühren. Durch diese Anordnung wird die Drosselklappe schwimmend gelagert.

Im Unterschied zu den bekannten Lösungen erlaubt die vorliegende Erfindung die Herstellung einer kostengünstigen Drosselklappenarmatur, die sich dadurch auszeichnet, dass keinerlei Flansche und/oder Verbindungsringe, also keine Dreh- oder Gussteile nötig sind. Durch die besondere Formgebung der zu verbindenden Stutzen oder Behälterteile erfordert die erfindungsgemässe Drosselklappenarmatur auch kein eigenes Gehäuse für die Lagerung der Drosselklappe. Diese ist schwimmend im Dichtungsring gelagert. Dadurch kann der durch die starken Vibrationen erzeugte Verschleiss der Drosselklappe und deren Halterungen wesentlich reduziert werden.

Darüber hinaus erlaubt die erfindungsgemässe Ausführung die Herstellung der Drosselklappenatmatur wesentlich zu vereinfachen und Material sowie Kosten zu sparen. Die Gewichtseinsparung kann bis zu 50% oder mehr betragen.

Bei der erfindungsgemässen Drosselklappenarmatur sind der Förderstutzen und der Auslaufstutzen aus Blechformteilen geformt. Um zu verhindem, dass die Lagerzapfen der Drosselklappe beim Vibrieren die Blechformteile touchieren können diese mit geeignet plazierten und dimensionierten Aussparungen versehen sein.

In einer weiteren Ausführungsform weisen die Stufenränder konisch geformte Schultem auf, um mit Hilfe eines wirkungskomplementär geformten Spannrings eine passgenaue Zentrierung derselben zu gewährleisten. Eine besondere Ausbildung weist einen Spannring mit zwei Spannringhälften auf, welche über eine Gelenkverbindung und einen Hebelverschluss miteinander verbunden sind. Diese Gelenkverbindung kann in Form eines Scharniers oder in Form zweier formschlüssig ineinander greifende und gegeneinander auslenkbare Verbundelemente (interlocking elements) ausgebildet sein. Es versteht sich, dass der Spannring mit einem Sockel für die Befestigung eines manuell, pneumatisch oder elektromotorisch betätigbaren Stellantriebs versehen ist.

In einer Weiterbildung der erfindungsgemässen Drosselklappenarmatur ist vorgesehen mindestens einen der Lagerzapfen mit einer Vorrichtung zum Ableiten elektrischer Ladungen in Kontakt zu bringen, um die Gefahren bei einer elektrostatischen Aufladungen der schwimmend gelagerten Drosselklappe zu vermeiden. Diese Vorrichtung zum Ableiten der elektrischen Ladungen kann in Form einer metallischen Feder, in Form einer Schleiffläche o.ä. ausgebildet sein.

Um das Einsetzen resp. Entfernen der Drosselklappe weiter zu vereinfachen ist in einer weiteren Ausführungsform der Dichtungsring mindestens im Bereich einer Rundlochöffnung geschlitzt, d.h. mit einem kommunizierenden Schlitz versehen.

Die Vorteile der efindungsgemässen Drosselklappenarmatur sind unmittelbar erkennbar, insbesondere die einfache und werkzeugfreie Montage resp. Demontage durch einfaches Schliessen oder Öffnen des Spannrings. Die materialsparende, leichtgewichtige und einfache Herstellung der Drosselklappenarmatur wird durch die Modulbauweise und die schwimmende Lagerung der Drosselklappe ermöglicht, mit welcher die Vibrationen gedämpft werden, d.h. nicht direkt auf das Gehäuse übertragen werden und damit zu einer verschleissarmen Armatur führen.

Im Folgenden soll die Erfindung anhand eines Ausführungsbeispiels und mit Hilfe der Figuren näher erläutert werden. Dabei zeigt:
- Figur 1:: eine schematische Darstellung einer efindungsgemässen Drosselklap- penarmatur in montiertem Zustand;
- Figur 2:: eine schematische Darstellung der schwimmenden Lagerung eines Lagerzapfens in den erfindungsgemäss geformten Stutzen;
- Figur 3:: eine schematische Darstellung eines Austaufstutzens mit einem erfin- dungsgemässen Stufenrand für die Aufnahme eines Dichtungsrings;
- Figur 4:: eine räumliche Darstellung einer bevorzugten Ausführungsform eines Spannrings mit einer konventionellen Gelenkverbindung;
- Figur 5:: eine räumliche Darstellung einer weiteren Ausführungsform eines Spannrings mit einer trennbaren Gelenkverbindung.

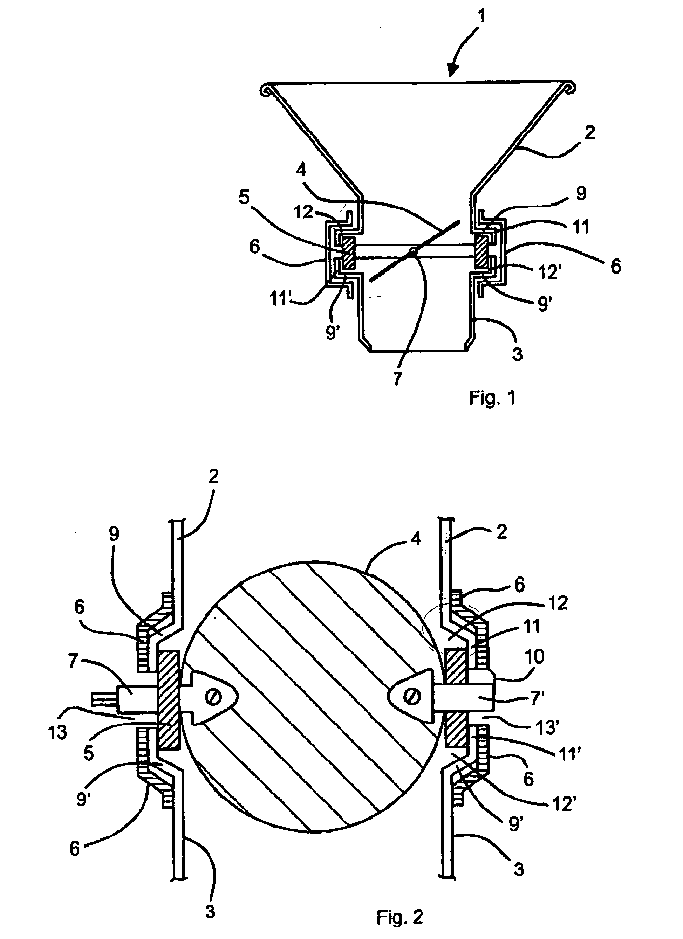

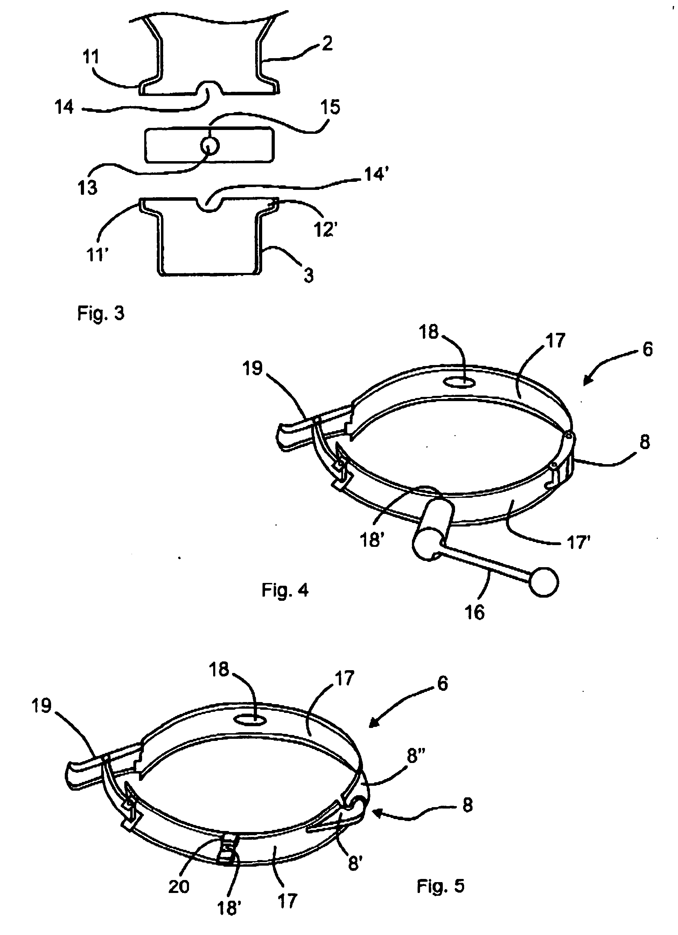

Die in Fig. 1 dargestellte Drosselklappenarmatur 1 umfasst einen Förderstutzen 2, der in dieser Darstellung an seinem oberen Ende einen trichterförmigen Einlauf aufweist. Das untere Ende dieses Förderstutzens 2 ist in erfindungsgemässer Weise aufgeweitet, d.h. weist einen Stufenrand 11 auf. Dieser Stufenrand 11 umfasst eine Schulter 9 und bildet einen Dichtungssitz 12, in welchen Dichtungssitz 12 ein oberer Teil eines Dichtungsrings 5 passend eingelegt ist. Unterhalb des Förderstutzens 2 ist ein Auslaufstutzen 3 vorgesehen, welcher an seinem oberen Ende in gleicher Weise aufgeweitet ist und einen Stufenrand 11' mit Schultern 9' aufweist. Dieser Stufenrand 11' bildet in analoger Weise einen Dichtungssitz 12' und nimmt den unteren Teil des Dichtungsrings 5 passend auf. Dieser Dichtungsring 5 ist derart dimensioniert, dass die jeweiligen Stufenränder 11,11' berührungslos aufeinander zu liegen kommen. Die jeweiligen Stufenränder 11, 11' resp. Stutzen 2, 3 werden mit Hilfe eines Spannrings 6 zusammengehalten und zentriert. Der Dichtungsring 5 weist zwei einander gegenüber liegende Rundlochöffnungen 13 (Fig. 3) auf, in welche Lagerzapfen 7, 7' einer Drosselklappe 4 gelagert sind. Die Drosselklappe 4 kann somit schwimmend gelagert werden, d.h. die bei der Förderung von Füllgut erzeugten Vibrationen der Drosselklappe 4 werden nicht direkt und nur gedämpft an die Stutzen 2, 3 übertragen.

Die in Fig. 2 in Öffnungsstellung gezeigte Ausgestaltung der erfindungsgemässen Drosselklappenarmatur 1 weist einen Förderstutzen 2, dessen Stufenrand mit einer sich nach unten aufweitenden Schulter 9 versehen ist. Ebenso zeigt der Auslaufstutzen 3 einen Stufenrand mit einer sich nach oben aufweitende Schulter 9'. Zwischen diesen beiden Schultern 9, 9' ist der Dichtungsring 5 eingelegt und trägt sowohl den Antriebszapfen 7 als auch den Drehzapfen 7'. In dieser Beschreibung werden diese Zapfen nicht unterschieden und lediglich als Lagerzapfen 7.7' bezeichnet. Die jeweiligen Stufenränder 11, 11' sind mit Hilfe eines komplementär passgenau geformten Spannrings 6 miteinander verbunden. Durch einen konischen Verlauf der Schultern 9, 9' und die komplementär passgenau ausgebildete Form des Spannrings 6 können sich die Stufenränder 11, 11' beim Spannen des Spannrings 6 nicht verkanten und zentrieren sich selbsttätig.

In einer bevorzugten Ausführungsform der erfindungsgemässen Drosselklappenarmatur 1 weist der Auslaufstutzen 3, wie in Fig. 3 gezeigt, eine Aussparung 14' auf. Diese Aussparung 14' im Stufenrand 11' des Auslaufstutzens 3 liegt im montierten Zustand im Bereich eines Lagerzapfens 7,7', Korrespondierende Aussparungen sind auch auf der gegenüberliegenden Seite vorgesehen und liegen im Stufenrand 11 des Förderstutzens 2. Diese Aussparungen 14, 14' gewährleisten die schwimmende Lagerung der Lagerzapfen 7, 7'.

Der in Fig. 4 gezeigt Spannring 6 umfasst zwei Ringteile 17, 17', die je eine öffnung 18, 18' für den Durchtritt der Lagerzapfen 7, 7' aufweisen. Diese Öffnungen 18, 18' sind derart dimensioniert, dass die Lagerzapfen 7, 7' im montierten Zustand den Spannring 6 nicht berühren. Die beiden Ringteile 17 und 17' des Spannrings 6 sind durch eine Gelenkverbindung 8 in Form eines Scharniers miteinander verbunden und können mit Hilfe einer Spannverschlussvorrichtung 19 in konventioneller Weise kraft- und formschlüssig um die Stufenränder 11, 11' gespannt werden. In einer bevorzugten Ausgestaltung sind die Ringteile 17, 17' dieses Spannrings 6 so geformt, dass diese die konischen Schulter 9, 9' der Stufenränder passgenau umschliessen. Der gezeigte Spannring 6 ist mit einem manuell betätigbaren Stellantrieb 16 versehen, in welchen ein als Antriebszapfen ausgebildeter Lagerzapfen 7 der Drosselklappe 4 einsteckbar ist.

Bei der in Fig. 5 dargestellten Ausführungsform des Spannrings 6 ist die Gelenkverbindung 8 in Form zweier formschlüssig ineinander greifender und gegeneinander auslenkbarer Verbundelemente (interlocking elements) 8', 8" ausgebildet Es versteht sich, dass der Spannring 6 eine Konsole 20 für die Befestigung eines Stellantriebs aufweist. Diese Konsole kann mit dem Spannring 6 fest verbunden sein, insbesondere verschweisst sein. Damit kann der Stellantrieb jeweils gleichzeitig mit dem Spannring 6 montiert bzw. demontiert werden. Als Stellantriebe eignen sich mechanische Drehhebel, wie auch pneumatisch oder elektrisch getriebene Stellantriebe.

Zur Verhinderung von statischen Aufladungen sind die einzelnen Lagerzapfen 7, 7' der Drosselklappe 4 mit einer Vorrichtung (10) zum Ableiten elektrischer Ladungen in Kontakt, insbesondere in Form einer metallischen Feder, einer leitenden Schleifflache o.ä.

Die Vorteile der vorliegende Erfindung sind dem Fachmann unmittelbar ersichtlich und insbesondere in der Gewichts- und Materialreduktion ohne Einbusse an Verschleissfestigkeit zu sehen. Weitere Vorteile ergeben sich aus der modularen Bauweise, welche eine Montage und Demontage in einfachster Weise, d.h. werkzeugfrei ermöglicht. Insbesondere können handelsübliche Bauteile für die Drosselklappe oder für den Stellantrieb verwendet werden.

Es versteht sich, dass der Dichtungsring je nach Fördergut aus einem weicheren oder härteren Material bestehen kann. So wird der Fachmann für die Förderung von leicht fliessfähigem Fördergut ein weiches Material wählen und für rieselfähige Fördergüter eher härtere und verschleissfeste Materialien aus Metall oder Kunststoff einsetzen. Die besondere Formgebung des Dichtungssitzes und/oder des Dichtungsrings passt der Fachmann den besonderen konstruktiven Erfordernissen an.

## Patentansprüche

1. Drosselklappenarmatur (1) zur Dosierung und/oder Regulierung der Fördermenge eines Füllguts umfassend folgende Bauteile (2, 3, 4, 5, 6): einen Fürderstutzen (2), einen Auslaufstutzen (3), eine dazwischen angeordnete Drosselklappe (4) mit zwei Lagerzapfen (7, 7'), welche durch Rundlochöffnungen (13, 13') in einem elastischen Dichtungsring (5) hindurchragen sowie einen mit einer Spannverschlussvorrichtung (19) verspannbaren Spannring (6) zur Halterung dieser Bauteile (2, 3, 4, 6, 6), wobei im montierten Zustand die Drosselklappe (4) über die Lagerzapfen (7, 7') im Dichtungsring (5) schwimmend gelagert ist,
**dadurch gekennzeichnet, dass**
der Förderstutzen (2) und der Auslaufstutzens (3) an ihren einander gegenüberliegenden Enden angeformte Stufenränder (11, 11') aufweisen, welche einen Dichtungssitz (12, 12') mit Schultern (9) für den innen liegenden Dichtungsring (5) bilden, wobei im montierten Zustand die einander gegenüberliegenden Stufenränder (11, 11') wegen des im Dichtungssitz (12, 12') liegenden Dichtungsrings (5) voneinander beabstandet sind, wobei im montierten Zustand der Spannring (6) diese Stufenränder (11, 11') umgreift und gemeinsam zentriert, wobei der Förderstutzen (2) und der Auslaufstutzens (3) Blechformteile sind.

2. Drosselklappenarmatur (1) nach Anspruch 1, **dadurch gekennzeichnet, dass** die Stufenränder (11,11') Aussparungen (14, 14') im Bereich der Lagerzapfen (7, 7') aufweisen derart, dass die Lagerzapfen (7, 7') der Drosselklappe (4) die Stufenränder (11, 11') des Förderstutzens (2) und des Auslaufstutzens (3) nicht berühren.

3. Drosselklappenarmatur (1) nach einem der Ansprüche 1 oder 2, **dadurch gekennzeichnet, dass** die Stufenränder (11, 11') konisch geformte Schultern (9) aufweisen, um mit Hilfe des komplementär geformten Spannrings (6) eine passgenaue Zentrierung derselben zu gewährleisten.

4. Drosselklappenarmatur (1) nach einem der Ansprüche 1 bis 3, **dadurch gekennzeichnet, dass** der Spannring (6) zwei Spannringhälften (6', 6") aufweist, welche über eine Gelenkverbindung (8) miteinander verbunden sind.

5. Drosselklappenarmatur (1) nach Anspruch 4, **dadurch gekennzeichnet, dass** die Gelenkverbindung (8) in Form eines Scharniers ausgebildet ist.

6. Drosselklappenarmatur (1) nach Anspruch 4, **dadurch gekennzeichnet, dass** die Gelenkverbindung (8) in Form zweier formschlüssig ineinander greifende und gegeneinander auslenkbare Verbundelemente (interlocking elements) (8', 8") ausgebildet ist.

7. Drosselklappanarmatur (1) nach einem der Ansprüche 1 bis 6, **dadurch gekennzeichnet, dass** der Spannring (6) mit einem manuell, pneumatisch oder elektromotorisch betätigbaren Stellantrieb (16) versehen ist, in welchen ein als Antriebszapfen (7') ausgebildeter Lagerzapfen (7) der Drosselklappe (4) einsteckbar ist.

8. Drosselklappenarmatur (1) nach einem der Ansprüche 1 bis 7, **dadurch gekennzeichnet, dass** mindestens einer der Lagerzapfen (7, 7') der Drosselklappe (4) mit einer Vorrichtung (10) zum Ableiten elektrischer Ladungen in Kontakt ist, insbesondere in Form einer am Spannring (6) leitend befestigten metallischen Feder oder Schleiffläche.

9. Drosselklappenarmatur (1) nach einem der Ansprüche 1 bis 8, **dadurch gekennzeichnet, dass** der Dichtungsring (5) mindestens einen mit einer Rundlochöffnung (13, 13') kommunizierenden Schlitz (15) aufweist, um das Einsetzen resp. Entfernen der Drosselklappe (4) zu vereinfachen.

## Claims

1. Butterfly valve assembly (1) for dosing and/or regulating a supply rate of a loading material comprising the following components (2, 3, 4, 5, 6): a charging lug (2), a discharging lug (3), a butterfly valve (4) arranged in between and comprising two bearing pivots (7, 7') protruding through round hole openings (13, 13') in an elastic sealing ring (5), and a clamping ring (6) which is braceable by a turnbuckle tightening device (19) and for supporting these components (2, 3, 4 , 5, 6), wherein in the assembled state, the butterfly valve (4) is floating mounted in the sealing ring (5) via the bearing pivots (7, 7'),
**characterized in that**
the charging lug (2) and the discharge lug (3) comprise integrally formed step edges (11, 11 ') on their opposite sides, which step edges form a sealing seat (12, 12') with shoulders (9) for the sealing ring (5) located therein, whereby in the mounted state the opposite resting step edges (11, 11 ') are spaced from each other because of the sealing ring (5) lying in the sealing seat (12, 12'), whereby in the assembled state the clamping ring (6) takes hold of and centers these step edges (11, 11 '), wherein the charging lug (2) and the discharging lug (3) are formed from sheet metal.

2. Butterfly valve assembly (1) according to claim 1, **characterized in that** the step edges (11, 11 ') comprise recesses (14, 14') in the region of the bearing pivots (7, 7 '), such that the bearing pivots (7, 7') of the butterfly valve (4) do not touch the step edges (11, 11 ') of the charging lug (2) and of the discharging lug (3).

3. Butterfly valve assembly (1) according to any one of claims 1 or 2, **characterized in that** the step edges (11, 11 ') comprise conically shaped shoulders (9), to ensure an accurately fitting centering of the same by means of the complementary shaped clamping ring (6).

4. Butterfly valve assembly (1) according to any one of claims 1 to 3, **characterized in that** the clamping ring (6) comprises two clamping ring halves (17, 17') which are connected to each other by an articulated joint (8).

5. Butterfly valve assembly (1) according to claim 4, **characterized in that** the articulated joint (8) is in the form of a hinge.

6. Butterfly valve assembly (1) according to claim 4, **characterized in that** the articulated joint (8) is in the form of two swiveling and positively interengaging interlocking elements (8', 8").

7. Butterfly valve assembly (1) according to any one of claims 1 to 6, **characterized in that** the clamping ring (6) is provided with a manual, pneumatic or electromotoric operable actuator (16), in which a bearing pivot (7) of the butterfly valve (4) can be inserted, which bearing pivot (7) is designed as an actuator pivot (7').

8. Butterfly valve assembly (1) according to any one of claims 1 to 7, **characterized in that** at least one of the bearing pivots (7, 7') of the butterfly valve (4) is in contact with a device (10) for discharging electric charge, in particular in the form of a metallic spring or of a contact slider conductively attached to the clamping ring (6).

9. Butterfly valve assembly (1) according to any one of claims 1 to 8, **characterized in that** the sealing ring (5) comprises at least a round hole opening (13, 13') which is provided with a communicating slot (15) for the ease of insertion or removal of the butterfly valve (4).

## Revendications

1. Armature soupape à papillon (1) pour le dosage et/ou la régulation de la quantité à livrer un matériau d'apport, laquelle armature comprenant les composants suivants (2, 3, 4, 5, 6): un tuyau à entrer (2), un tuyau à vider (3), une soupape à papillon (4) arrangée entre ces tuyaux et comportant deux tourillons (7, 7') passant à travers des ouvertures de trous ronds (13, 13') dans une bague d'étanchéité élastique (5), et un bague de serrage (6) qui est serrable par un dispositif de serrage (19) pour fixer ces composants (2, 3, 4 , 5, 6), cependant dans l'état assemblé, la soupape à papillon (4) est montée en flottant dans la bague d'étanchéité (5) par l'intermédiaire des tourillons (7, 7'),
**caractérisé en ce que**
le tuyau à entrer (2) et le tuyau à vider (3) comportent chaque une bordure au gradin (11, 11 ') intégralement formée à leur extrémités opposés, qui présentent un siège d'étanchéité (12, 12') avec des épaulements (9) pour la bague d'étanchéité (5) restant la dedans, cependant dans l'état assemblée les bordures de gradin (11, 11') opposées se trouvant espacés à cause de bague d'étanchéité (5) restant au siège d'étanchéité (12, 12'), cependant dans l'état assemblé le bague de serrage (6) entoure et centre ces bordures au gradin (11, 11') en commun, cependant le tuyau à entrer (2) et le tuyau à vider (3) sont des pièces de forme en tôle.

2. Armature soupape à papillon (1) selon la revendication 1, **caractérisé en ce que** les bordures de gradin (11, 11 ') présentent des échancrures (14, 14') dans la zone des tourillons (7, 7') de telle manière que les tourillons (7, 7') de la soupape de papillon (4) ne touche pas les bordures au gradin (11, 11 ') du tuyau à entrer (2) et du tuyau à vider.

3. Armature soupape à papillon (1) selon l'une quelconque des revendications 1 ou 2, **caractérisé en ce que** les bordures au gradin (11, 11 ') présentent des épaules (9) en forme conique, pour assurer au moyen de la bague de serrage (6) en forme complémentaire un centrage ajusté avec précision.

4. Armature soupape à papillon (1) selon l'une quelconque des revendications 1 à 3, **caractérisé en ce que** la bague de serrage (6) présente deux moitiés de serrage (17, 17'), qui sont reliées l'une à l'autre par l'intermédiaire d'une liaison articulée (8).

5. Armature soupape à papillon (1) selon la revendication 4, **caractérisé en ce que** la liaison articulée (8) est en forme d'une charnière.

6. Armature soupape à papillon (1) selon la revendication 4, **caractérisé en ce que** la liaison articulée (8) est réalisé sous la forme de deux éléments de verrouillage (8 ', 8"), qui s'engrènes positivement et peuvent s'écartés.

7. Armature soupape à papillon (1) selon l'une quelconque des revendications 1 à 6, **caractérisé en ce que** la bague de serrage (6) est munit d'un actionnement (16) manuel, pneumatique ou électromotrice, dans lequel un tourillon (7) de la soupape à papillon (4), qui est en forme d'un tourillon d'entraînement (7'), est insérable.

8. Armature soupape à papillon (1) selon l'une quelconque des revendications 1 à 7, caractère en ce qu'au moins un des tourillons (7, 7') de la soupape à papillon (4) est en contact avec un dispositif (10) pour dériver une charge électrique, en particulier en forme d'un ressort métallique ou balai conducteur, qui est fixer à la bague de serrage (6).

9. Armature soupape à papillon (1) selon l'une quelconque des revendications 1 à 8, **caractérisé en ce que** la bague d'étanchéité (5) présente au moins une échancrure (15) communicante avec une ouverture de trou rond (13, 13') pour simplifier l'insertion respectivement le retirage de la soupape à papillon (4).
